# FASCICULE DE BREVET EUROPEEN

(11) **EP 2 870 389 B1**
(45) Date de publication et mention de la délivrance du brevet: **04.05.2016**
(21) Numéro de dépôt: 13739759.2
(22) Date de dépôt: 01.07.2013
(51) Int. Cl.: F16K 1/226

(54) **VANNE DE CONTRÔLE MOTEUR À ÉTANCHÉITÉ AMÉLIORÉE**
MOTOR STEUERVENTIL MIT VERBESSERTER DICHTHEIT
MOTOR CONTROL VALVE WITH IMPROVED TIGHTNESS

(30) Priorité: 04.07.2012 FR 1256390
(43) Date de publication de la demande: 13.05.2015
(73) Titulaire: Valeo Systèmes de Contrôle Moteur, 95800 Cergy (FR)
(72) Inventeur: HODEBOURG, Gregory, F-78500 Sartrouville (FR)
(74) Mandataire: Garcia, Christine
(86) Numéro de dépôt international: PCT/FR2013/051536
(87) Numéro de publication internationale: WO 2014/006311

(56) Documents cités:
- WO-A1-2010/000752
- WO-A1-2012/001283
- JP-A- 57 124 162

## Description

L'invention se rapporte à une vanne de contrôle moteur à étanchéité améliorée. Ce type de vanne peut, par exemple, équiper un circuit d'alimentation en gaz d'un moteur thermique de véhicule, pour réguler le débit des gaz EGR (Exhaust Gas Recirculation) dans une boucle permettant de ponctionner une partie des gaz d'échappement en sortie de moteur, pour les réinjecter en amont dudit moteur. Le principe de fonctionnement de ce type de vanne repose sur la rotation commandée d'un volet, pouvant passer d'une position d'ouverture complète pour laisser passer le fluide, à une position de fermeture pour bloquer ce passage. L'invention a pour objet une vanne de contrôle moteur à étanchéité améliorée.

Une vanne de contrôle moteur possède donc un volet, qui est monté pivotant sur un axe de rotation. Ledit axe peut séparer le volet en une première partie et en une deuxième partie. Lorsque ce volet se retrouve dans une position de fermeture, il vient au contact d'un joint solidaire du corps de la vanne, ledit joint assurant l'étanchéité de la vanne en agissant alors comme une butée de positionnement dudit volet. Plus spécifiquement, le joint peut être globalement plan, et être fixé dans le corps de la vanne, en étant inséré au niveau de son pourtour entre deux éléments de fonderie dudit corps. Le joint possède une ouverture, et lorsque le volet est en position de fermeture, la première partie du volet vient au contact de l'une des deux faces du joint pour obturer ladite ouverture, tandis que la deuxième partie dudit volet vient affleurer l'autre face dudit joint. Le volet est de faible épaisseur et possède généralement une forme rectangulaire.

Dans un premier temps, le joint ne recouvrait que trois des quatre arêtes périphériques dudit volet, laissant subsister un passage potentiel pour les gaz au niveau de la quatrième arête du volet, qui est non recouverte par ledit joint. Ainsi, lorsque le volet est en position de fermeture contre le joint, ledit passage est susceptible de favoriser une fuite inopinée des gaz. Il en résulte une étanchéité assez médiocre de ladite vanne en configuration de fermeture.

Dans un deuxième temps, une solution pour remédier à cette étanchéité de mauvaise qualité a consisté à fabriquer un joint, soit en une seule partie, soit en deux parties, qui est suffisamment étendu pour recouvrir pleinement les quatre arêtes périphériques du volet, et ainsi limiter les sources de fuite.

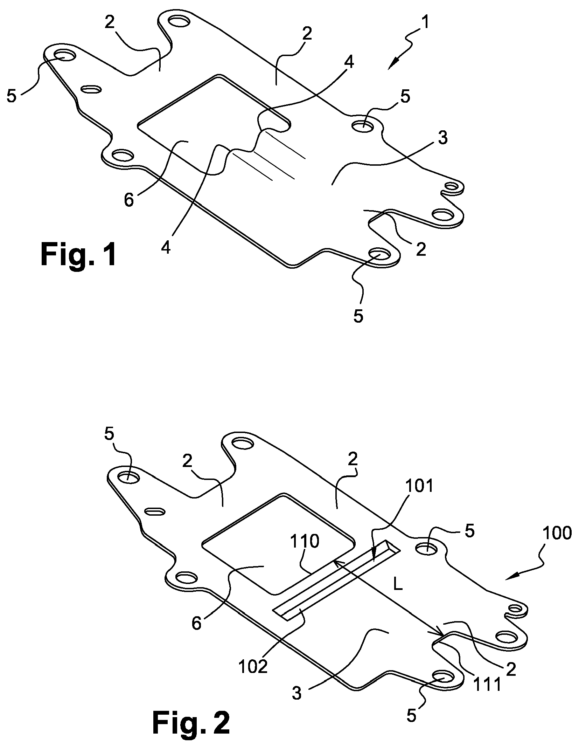

Or, en se référant à la figure 1, un problème régulièrement rencontré avec ce type de joint 1 étendu est qu'il est soumis à la fois à une pression et une température élevées de la part des gaz présents dans la vanne, et qu'il va donc avoir tendance à se déformer sous l'effet d'une dilatation thermique. Puisqu'il est inséré au niveau de son bord externe 2, entre deux éléments de fonderie, la déformation va essentiellement se porter sur la partie centrale 3 du joint 1, avec la création de bosses 4 et/ou de creux, susceptibles de constituer des passages de fuite pour les gaz situés dans la vanne. Autrement dit, l'utilisation d'un joint 1 plus étendu ne fait que déplacer le problème initialement rencontré avec un joint ne recouvrant que partiellement le volet.

Les documents WO2010/000752, WO2012/001283 ou JP57124162 décrivent des ensembles volet-joint.

Une vanne de contrôle moteur selon l'invention met en oeuvre un joint étendu recouvrant intégralement les quatre arêtes périphériques du volet, ledit joint étant conformé pour ne pas se déformer sous l'effet d'une température et d'une pression élevées des gaz. De cette manière, une vanne de contrôle moteur selon l'invention présente un double niveau d'étanchéité. Un premier niveau est lié au fait que le joint recouvre intégralement le volet et ne laisse donc subsister aucun passage de fuite potentiel, et un deuxième niveau est lié au fait qu'il ne se déforme pas sous l'effet conjugué d'une pression et d'une température élevées des gaz présents dans la vanne.

L'invention a pour objet, selon l'un de ses aspects, une vanne de contrôle moteur, présentant un corps délimitant un conduit interne et comprenant un volet monté pivotant par un axe, ledit volet comprenant une première partie et étant apte à pivoter entre une position d'ouverture permettant le passage du fluide dans le conduit, et une position de fermeture pour laquelle le volet vient en contact avec un joint, notamment plan, de la vanne, ledit joint présentant un contour extérieur entourant extérieurement le contour extérieur du volet et comprenant une ouverture et une portion pleine, ladite première partie venant obturer l'ouverture du joint lorsque le volet est dans une position de fermeture, le joint présentant une zone de renforcement dans sa portion pleine, de façon à éviter audit joint de se déformer sous l'effet d'une pression et d'une température élevées des gaz présents dans ladite vanne.

En effet, puisque le joint est étendu et qu'il est fixé au corps de la vanne au niveau de son bord périphérique, la partie centrale dudit joint est peu maintenue et est donc susceptible de se déformer facilement sous l'effet d'une température élevée et d'une pression importante des gaz. Cette déformation peut se traduire par des bosses ou des creux, qui vont créer des passages de fuite potentiels pour les gaz et ainsi affecter l'étanchéité de la vanne lorsqu'elle occupe une position de fermeture. La zone de renforcement sur le joint est donc destinée à empêcher une déformation de ce joint de manière à préserver sa forme initiale afin qu'il puisse assurer une bonne qualité d'étanchéité de la vanne. Cette zone de renforcement servant à rigidifier au moins partiellement le joint, peut a priori revêtir toute forme, et être par exemple constituée d'une surépaisseur de matière ou d'un relief creux de type nervure, issu d'un emboutissage du joint. Cette zone de renforcement n'alourdit avantageusement pas le volet, et n'accroît avantageusement pas son encombrement, afin d'éviter d'entraver son mécanisme de rotation dans la vanne.

De façon préférentielle, le joint comprend un bord définissant une partie du contour de l'ouverture, ledit bord étant parallèle à l'axe du volet et la portion pleine peut s'étendre entre ledit bord et un autre bord du joint formant une partie de son contour extérieur. Cet autre bord du joint peut également ou non être parallèle à l'axe du volet.

De façon préférentielle, la zone de renforcement est placée au moins partiellement dans le tiers de la portion pleine du joint situé le plus proche de l'ouverture. En effet, il est important de placer la zone de renforcement sur la partie du joint qui est la plus sollicitée en matière de contraintes thermiques et de pression. Dans le cas où la portion pleine s'étend entre les deux bords parallèles du joint mentionnés ci-dessus, la distance entre le bord délimitant une partie du contour de l'ouverture et tout élément de la zone de renforcement peut être inférieure au tiers de la distance entre lesdits bords parallèles du joint.

Le volet peut comprendre une deuxième partie séparée de la première partie par l'axe du volet, ladite deuxième partie venant affleurer la portion pleine lorsque le volet est dans une position de fermeture.

Préférentiellement, les deux parties du volet sont planes. Ces deux parties peuvent être en continuité l'une de l'autre, la première partie du volet étant au contact d'une face du joint et la deuxième partie dudit volet affleurant la face opposée dudit joint, lorsque le volet est dans une position de fermeture. La partie du joint qui est sujette aux déformations est alors la portion pleine située sous la deuxième partie du volet, et qui borde l'ouverture qui est destinée à être obturée par la première partie du volet.

De façon avantageuse, la zone de renforcement est une zone creuse en relief. Ce type de renforcement demeure particulièrement efficace tout en s'affranchissant d'un ajout de matière, qui pourrait alourdir le volet et augmenter son encombrement. Une telle zone creuse peut être réalisée de manière à créer au moins une bosse, ou au moins un creux, lesdites solutions étant équivalentes par rapport à l'objectif visé. L'une ou l'autre de ces deux solutions sera privilégiée en fonction de la géométrie interne de la vanne.

Avantageusement, la zone de renforcement est une nervure qui s'étend parallèlement à l'axe de rotation du volet, et qui est voisine de l'ouverture dudit joint. En effet, il n'est pas nécessaire que la zone de renforcement soit étendue sur le joint. Elle peut être positionnée sur le joint au plus juste, de manière à contenir les efforts dus aux gaz, afin que ledit joint ne se déforme pas. Cette nervure peut indifféremment être continue ou discontinue. La position la plus efficace de la nervure est lorsqu'elle s'étend parallèlement à l'axe du volet, et en étant proche de l'ouverture. Le terme « proche de l'ouverture » signifie qu'elle est localisée dans le tiers de la portion pleine du joint le plus proche de l'ouverture.

De façon préférentielle, la zone de renforcement est réalisée par emboutissage du joint. L'emboutissage est un procédé simple, rapide et pleinement efficace, permettant d'obtenir un relief creux, de la forme et de la dimension souhaitées.

Selon un autre mode de réalisation préféré d'une vanne selon l'invention, la zone de renforcement est constituée par une épaisseur de matière ajoutée. Pour cette configuration, il peut s'agir, par exemple, d'une bande de métal fine, soudée audit joint et dont l'épaisseur n'excède pas un millimètre. Selon cet autre mode de réalisation préféré, la zone de renforcement peut s'étendre parallèlement à l'axe de rotation du volet.

Préférentiellement, le volet et le joint sont en inox.

De façon avantageuse, le joint est fixé au corps de la vanne, en étant inséré au niveau de son bord périphérique, entre deux éléments du corps. Les deux éléments du corps sont par exemple de fonderie. De cette manière, une partie annulaire et périphérique du joint sert à l'arrimage du joint dans la vanne, le reste dudit joint étant disponible pour coopérer avec le volet et assurer les conditions d'étanchéité requises.

Avantageusement, les deux éléments de fonderie sont en aluminium. En variante, l'un des éléments de fonderie peut être en aluminium tandis que l'autre élément de fonderie est en fonte ou en inox.

Dans tout ce qui précède, le joint peut être plan, c'est-à-dire que les faces opposées du joint peuvent chacune appartenir exclusivement à un plan donné.

En variante, seule une partie du joint peut être plane.

Les vannes selon l'invention présentent l'avantage d'être performantes en matière d'étanchéité, en s'affranchissant de l'ajout d'une pièce supplémentaire et d'un réaménagement en profondeur de leur corps, qui sont des solutions lourdes à mettre en oeuvre et coûteuses. Il en résulte que ces vannes possèdent une fonctionnalité supplémentaire à travers cette étanchéité accrue, tout en demeurant d'un encombrement constant. Les vannes selon l'invention ont de plus l'avantage de présenter une certaine modularité, car la zone de renforcement pratiquée dans le joint peut adopter une taille et une géométrie appropriées, en fonction de la configuration interne desdites vannes, et du niveau de sollicitation que pourraient engendrer les gaz présents dans ces vannes.

On donne ci-après, une description détaillée d'un mode de réalisation préféré d'une vanne selon l'invention, en se référant aux dessins annexés sur lesquels :
- La figure 1 est une vue filaire d'un joint déformé de l'état de la technique,
- La figure 2 est une vue filaire d'un joint selon l'invention,
- La figure 3 est une vue partielle d'un volet et d'un joint d'une vanne selon l'invention, et
- La figure 4 est une vue en coupe schématisée d'un volet et d'un joint selon l'invention.

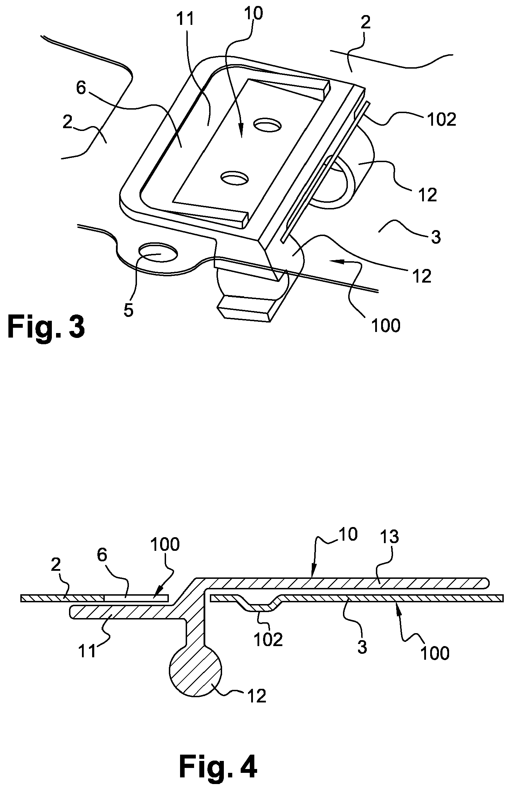

Bien que les figures 3 et 4 montrent une vanne selon l'invention, elles servent également de base à la description d'une vanne de l'état de la technique, pour ce qui concerne les parties communes, qui sont majoritaires.

Une vanne de contrôle moteur selon un exemple de mise en oeuvre de l'invention peut par exemple être constituée par une vanne EGR (de l'anglais Exhaust Gas Recirculation), régulant le débit des gaz dans une boucle reliant un circuit d'échappement à un circuit d'admission d'air d'un moteur thermique de véhicule.

En se référant à la figure 1, un joint 1 de l'état de la technique est en inox rigide, et est inséré au niveau de son bord périphérique 2, entre deux éléments de fonderie en aluminium du corps de ladite vanne 1. Ce bord périphérique 2 comporte ainsi un certain nombre d'orifices 5, destinés à être traversés par des vis pour fixer le joint 1 entre lesdits éléments de fonderie. Ce joint 1 est plan, de forme sensiblement rectangulaire et de faible épaisseur, et possède une portion pleine 3 et une ouverture 6 de passage pour les gaz.

En se référant aux figures 3 et 4, ce type de vanne 1 comprend un conduit interne et fonctionne avec un volet 10 mobile en rotation, entre une position de complète ouverture, pour laquelle il permet le passage des gaz dans le conduit avec un débit maximal, et une position de fermeture pour laquelle il obture entièrement ledit conduit. Le volet 10 est dans l'exemple décrit globalement rectangulaire et comporte une première 11 et une deuxième partie 13 rectangulaires, situées de part et d'autre d'un axe 12 de rotation, lesdites parties 11 étant planes, en continuité l'une de l'autre, et étant fixées l'une à l'autre de façon rigide. Le volet 10 est monté en rotation dans la vanne 10, de manière à ce que, en position de fermeture, la première partie 11 du volet 10 obture l'ouverture 6 en venant au contact d'une face dudit joint 1, et de manière à ce que la deuxième partie 13 du volet 10 affleure la face opposée dudit joint 1 au niveau de la portion pleine 3. L'axe de rotation 12 du volet 10 est placé au droit de l'ouverture 6 du joint 1, au niveau de la zone de ladite ouverture 6 la plus proche de la portion pleine 3 du joint 1. Lorsque le volet 10 s'ouvre pour laisser passer les gaz, les deux parties 11,13 pivotent simultanément pour s'écarter de la face du joint 1 contre laquelle elles étaient en appui ou en affleurement.

En se référant à la figure 1, un joint 1 de l'état de la technique est étendu, puisqu'il recouvre intégralement les deux parties 11,13 du volet 10, c'est-à-dire que son contour extérieur entoure extérieurement le contour extérieur du volet 10. En étant inséré à sa périphérie 2 entre deux éléments de fonderie, qui sont par exemple tous deux en aluminium ou en aluminium pour l'un et en inox ou en fonte pour l'autre, le joint 1 possède une zone centrale non maintenue, et donc structurellement faible, et susceptible de se déformer sous l'effet conjugué de la pression et de la température des gaz. En effet, puisque le joint 1 est fixé à sa périphérie 2, seule sa partie centrale, qui n'est pas bridée en mouvement, va subir les effets d'une dilatation thermique.

Cette déformation peut conduire le joint 1 à se gondoler, en créant des bosses 4 au niveau de la portion pleine 3 bordant l'ouverture 6. En position de fermeture du volet 10, ces bosses 4 ou creux vont se situer sous la deuxième partie 13 du volet 10. Ces bosses 4 ou ces creux vont alors créer des passages pour les gaz, notamment lorsque la vanne 1 est en position de fermeture, rendant son étanchéité de faible qualité.

En se référant aux figures 2, 3 et 4, le joint 100 d'une vanne selon un exemple de mise en oeuvre de l'invention se différencie d'un joint 1 d'une vanne de l'état de la technique par le fait qu'il comporte une zone de renforcement 101, dans sa partie qui est la plus sujette à se déformer sous l'effet des gaz chauds sous pression. Toutes les autres caractéristiques du joint 1 sont conservées. Cette zone de renforcement 101 est située préférentiellement dans la portion pleine 3 du joint 100, bordant l'ouverture 6. Cette zone de renforcement 101 consiste dans l'exemple décrit en une rainure 102 allongée et creuse, s'étendant parallèlement à un petit coté du joint 100 rectangulaire, et réalisée dans la portion pleine 3 dudit joint 100, en léger retrait de l'ouverture 6. Cette rainure 102 est continue dans l'exemple décrit et sa longueur est inférieure à la largeur du joint 100, correspondant à son petit côté. Cette rainure 102 est notamment réalisée par emboutissage du joint 100, dans la zone requise, qui est préférentiellement située dans le tiers de la portion pleine 3 le plus proche de l'ouverture 6.

Dans l'exemple décrit, la portion pleine s'étend entre deux bords 110 parallèles à l'axe de rotation du volet 10. Le bord 110 forme une partie du contour de l'ouverture 6 tandis que le bord 111 forme une partie du contour extérieur du joint 1. La rainure 102 est de préférence contenue dans une zone distante du bord 110 de moins du tiers de la distance L entre les bords 110 et 111.

## Revendications

1. Vanne de contrôle moteur, présentant un corps délimitant un conduit interne et comprenant un volet (10) monté pivotant par un axe (12), ledit volet (10) comprenant une première partie (11) et étant apte à pivoter entre une position d'ouverture permettant le passage du fluide dans le conduit, et une position de fermeture pour laquelle le volet (10) vient en contact avec un joint (100), notamment plan, de la vanne, ledit joint (100) présentant un contour extérieur entourant extérieurement le contour extérieur du volet (10) et comprenant une ouverture (6) et une portion pleine (3), ladite première partie (11) venant obturer l'ouverture (6) du joint (100) lorsque le volet (10) est dans une position de fermeture,
**caractérisée en ce que** le joint (100) présente une zone de renforcement (101) dans sa portion pleine (3), de façon à éviter audit joint (100) de se déformer sous l'effet d'une pression et d'une température élevées des gaz présents dans ladite vanne.

2. Vanne selon la revendication 1, le volet (10) comprenant une deuxième partie (13) séparée de la première partie (11) par l'axe (12) du volet (10), ladite deuxième partie venant affleurer la portion pleine (3) lorsque le volet est dans une position de fermeture.

3. Vanne selon la revendication 1 ou 2, la zone de renforcement (101) étant placée au moins partiellement dans le tiers de la portion pleine (3) du joint (100), situé le plus proche de l'ouverture (6).

4. Vanne selon l'une quelconque des revendications 1 à 3, la zone de renforcement (101) étant une zone creuse en relief.

5. Vanne selon la revendication 4, la zone de renforcement (101) étant une nervure (102) qui s'étend parallèlement à l'axe de rotation (12) du volet (10), et qui est voisine de l'ouverture (6) dudit joint (100).

6. Vanne selon l'une quelconque des revendications 4 ou 5, la zone de renforcement (101) étant réalisée par emboutissage du joint (100).

7. Vanne selon l'une quelconque des revendications 1 à 3, la zone de renforcement (101) étant constituée par une épaisseur de matière ajoutée.

8. Vanne selon la revendication 7, la zone de renforcement s'étendant parallèlement à l'axe de rotation (12) du volet (10).

9. Vanne selon la revendication 2 et l'une quelconque des revendications précédentes, les deux parties (11,13) du volet (10) étant planes, la première partie (11) du volet (10) étant au contact d'une face du joint (100) et la deuxième partie (13) dudit volet (10) affleurant la face opposée dudit joint (100), lorsque le volet (10) est dans une position de fermeture.

10. Vanne selon l'une quelconque des revendications 1 à 9, le joint (100) étant fixé au corps de la vanne, en étant inséré au niveau de son bord périphérique (2), entre deux éléments de fonderie du corps.

## Patentansprüche

1. Motorsteuerventil, das einen Körper aufweist, der einen inneren Kanal begrenzt und eine Klappe (10) enthält, die um eine Achse (12) schwenkbar montiert ist, wobei die Klappe (10) einen ersten Teil (11) enthält und zwischen einer Öffnungsstellung, die den Durchgang des Fluids durch den Kanal erlaubt, und einer Schließstellung schwenken kann, in der die Klappe (10) mit einer insbesondere ebenen Dichtung (100) des Ventils in Kontakt kommt, wobei die Dichtung (100) einen Außenumriss aufweist, der den Außenumriss der Klappe (10) außen umgibt, und eine Öffnung (6) und einen massiven Abschnitt (3) enthält, wobei der erste Teil (11) die Öffnung (6) der Dichtung (100) verschließt, wenn die Klappe (10) in einer Schließstellung ist,
**dadurch gekennzeichnet, dass** die Dichtung (100) eine Verstärkungszone (101) in ihrem massiven Abschnitt (3) enthält, um zu vermeiden, dass die Dichtung (100) sich unter der Wirkung eines Drucks und einer hohen Temperatur der im Ventil vorhandenen Gase verformt.

2. Ventil nach Anspruch 1, wobei die Klappe (10) einen zweiten Teil (13) enthält, der vom ersten Teil (11) durch die Achse (12) der Klappe (10) getrennt ist, wobei der zweite Teil den massiven Abschnitt (3) berührt, wenn die Klappe in einer Schließstellung ist.

3. Ventil nach Anspruch 1 oder 2, wobei die Verstärkungszone (101) sich zumindest teilweise in dem Drittel des massiven Abschnitts (3) der Dichtung (100) befindet, der der Öffnung (6) am nächsten ist.

4. Ventil nach einem der Ansprüche 1 bis 3, wobei die Verstärkungszone (101) eine reliefartig vertiefte Zone ist.

5. Ventil nach Anspruch 4, wobei die Verstärkungszone (101) eine Rippe (102) ist, die sich parallel zur Drehachse (12) der Klappe (10) erstreckt, und die der Öffnung (6) der Dichtung (100) benachbart ist.

6. Ventil nach einem der Ansprüche 4 oder 5, wobei die Verstärkungszone (101) durch Tiefziehen der Dichtung (100) hergestellt wird.

7. Ventil nach einem der Ansprüche 1 bis 3, wobei die Verstärkungszone (101) aus einer Dicke hinzugefügten Materials besteht.

8. Ventil nach Anspruch 7, wobei die Verstärkungszone sich parallel zur Drehachse (12) der Klappe (10) erstreckt.

9. Ventil nach Anspruch 2 und einem der vorhergehenden Ansprüche, wobei die zwei Teile (11, 13) der Klappe (10) eben sind, wobei der erste Teil (11) der Klappe (10) mit einer Seite der Dichtung (100) in Kontakt ist und der zweite Teil (13) der Klappe (10) die gegenüberliegende Seite der Dichtung (100) berührt, wenn die Klappe (10) in einer Schließstellung ist.

10. Ventil nach einem der Ansprüche 1 bis 9, wobei die Dichtung (100) am Körper des Ventils befestigt wird, indem sie im Bereich ihres Umfangsrands (2) zwischen zwei Gussteile des Körpers eingefügt wird.

## Claims

1. Engine control valve having a body that delimits an internal duct and comprising a flap (10) mounted in a pivoting manner by way of a pin (12), said flap (10) comprising a first part (11) and being able to pivot between an open position allowing fluid to pass through the duct and a closed position in which the flap (10) comes into contact with a gasket (100), in particular a flat gasket, of the valve, said gasket (100) having an external contour that externally surrounds the external contour of the flap (10) and comprising an opening (6) and a solid portion (3), said first part (11) closing off the opening (6) in the gasket (100) when the flap (10) is in a closed position,
**Characterized in that** the gasket (100) has a reinforcing region (101) in its solid portion (3), so as to prevent said gasket (100) from deforming under the effect of a high pressure and a high temperature of the gases present in said valve.

2. Valve according to Claim 1, wherein the flap (10) comprises a second part (13) that is separated from the first part (11) by the pin (12) of the flap (10), said second part being flush with the solid portion (3) when the flap is in a closed position.

3. Valve according to Claim 1 or 2, wherein the reinforcing region (101) is positioned at least partially in the third of the solid portion (3) of the gasket (100) that is located closest to the opening (6).

4. Valve according to any one of Claims 1 to 3, wherein the reinforcing region (101) is a hollow region in relief.

5. Valve according to Claim 4, wherein the reinforcing region (101) is a rib (102) which extends parallel to the rotary pin (12) of the flap (10) and is adjacent to the opening (6) in said gasket (100).

6. Valve according to either of Claims 4 and 5, wherein the reinforcing region (101) is produced by stamping the gasket (100).

7. Valve according to any one of Claims 1 to 3, wherein the reinforcing region (101) consists of a thickness of added material.

8. Valve according to Claim 7, wherein the reinforcing region extends parallel to the rotary pin (12) of the flap (10).

9. Valve according to Claim 2 and any one of the preceding claims, wherein the two parts (11, 13) of the flap (10) are flat, the first part (11) of the flap (10) being in contact with one face of the gasket (100) and the second part (13) of said flap (10) being flush with the opposite face of said gasket (100) when the flap (10) is in a closed position.

10. Valve according to any one of Claims 1 to 9, wherein the gasket (100) is fastened to the body of the valve by being inserted at its peripheral edge (2) between two cast elements of the body.
